## Europäisches Patentamt
## European Patent Office
## Office européen des brevets

(19)

(11) Publication number: **0 160 337**
**B1**

(12)

# EUROPEAN PATENT SPECIFICATION

(45) Date of publication of patent specification: **23.03.88**

(51) Int. Cl.⁴: **C 08 G 69/26,** C 08 G 69/28

(21) Application number: **85200598.2**

(22) Date of filing: **18.04.85**

(54) **Process for the preparation of polytetramethylene adipamide.**

(30) Priority: **19.04.84 NL 8401271**

(43) Date of publication of application:
**06.11.85 Bulletin 85/45**

(45) Publication of the grant of the patent:
**23.03.88 Bulletin 88/12**

(84) Designated Contracting States:
**BE CH DE FR GB IT LI NL SE**

(56) References cited:
**EP-A-0 038 094**
**EP-A-0 039 524**
**EP-A-0 077 106**

(73) Proprietor: **STAMICARBON B.V.**
**Mijnweg 1**
**NL-6167 AC Geleen (NL)**

(72) Inventor: **Gaymans, Reinoud Jaap**
**Keizerweg 25**
**NL-7548 PX Boekelo (NL)**
Inventor: **Bongers, Antonius Jozef Peter**
**Julianalaan 37**
**NL-6124 AG Papenhoven-Born (NL)**

(74) Representative: **Hoogstraten, Willem Cornelis**
**Roeland et al**
**OCTROOIBUREAU DSM Postbus 9**
**NL-6160 MA Geleen (NL)**

Courier Press, Leamington Spa, England.

**Description**

The invention relates to a process for the preparation of polytetramethylene adipamide by heating the salt of 1,4 diaminobutane and adipic acid at elevated pressure and subjecting the prepolymer thus formed to after-condensation in at least one subsequent reaction zone.

Such a process is known from a number of publications. EP—A—0039524 describes a process for the preparation of polytetramethylene adipamide (nylon 4,6) in which the salt of 1,4 diaminobutane and adipic acid is converted into a prepolymer under carefully defined conditions and this prepolymer is in solid condition subjected to after-condensation in a second reaction zone.

Such a process is also known from EPA—0038094.

JP—A—17036/74 discloses a process for the preparation of nylon 4,6 in which a solid product with a relative viscosity ($\eta_{rel}$, measured on 1 g polyamide in 100 ml concentrated $H_2SO_4$ at 20°C) of at most 2.37 is obtained by reacting at varying temperatures.

None of these processes admits of continuous operation.

For the preparation of nylon 6,6 continuous processes are known. DE—C—2417003 discloses a process in which the salt of 1,6 diaminohexane is heated in a first reaction zone until at least 80% polycondensation is achieved, is subsequently expanded adiabatically in a second zone and is reheated within a very short time in a third zone.

In NL—A—6603078 a process is described for the preparation of polyamide by pumping a salt of a diamine and a dicarboxylic acid (according to the example hexamethylene adipamide) through a heated tube.

US—A—3.900,450, 3,948,862 and 3,960,820 disclose processes for continuous preparation of nylon 6,6.

Practice has shown it is impossible to prepare nylon 4,6 with a high molecular weight and a good colour (white) while using the conditions known for nylon 6,6.

The object of this invention is to provide a continuous process for the preparation of white nylon 4,6 with a high molecular weight.

The process according to the invention is characterized in that a prepolymer-containing, liquid reaction mixture is prepared at a pressure between 2 and 100 bars and in that the temperature of this reaction mixture is maintained above its solidification point in a second reaction zone while the pressure is simultaneously reduced.

The prepolymerization preferably is effected at a temperature of at most 230°C during at most 40 minutes. By preference the pressure during this prepolymerization is between 2 and 15 bars. Under these conditions, a prepolymer is formed which can be aftercondensed until very good final products are obtained.

The second reaction zone preferably consists of a tubular reactor. Such a reactor has a very favourable surface: volume ratio, enabling supply of the heat required for keeping the reaction mixture liquid.

An important additional advantage of the process according to the invention is that it can be carried out in a simple and fast way, so that no voluminous or expensive equipment is needed.

In a mode of realization of the process according to the invention the length: diameter ratio of the tubular reactor is chosen so that at the end a liquid, high-molecular, white nylon 4,6 is obtained. After cooling and optional mixing with additives, the nylon 4,6 is suitable for further processing into final products such as fibres or impact-resistant objects.

If the molecular weight of the product leaving the tubular reaction zone should not yet be high enough, it can be increased further by subjecting the product to aftercondensation in one or more steps.

This can be effected in a number of ways.

A first method is to lead the liquid reaction mixture, subsequent to its passage through the second reaction zone, through one or more heated tubular reaction zones, each of which has a diameter that is least as large as that of the preceding tubular reaction zone. The temperature in each reaction zone is at least the solidification temperature of the reaction mixture. By preference this temperature is at least 5°C above it.

One of the factors determining the pressure to be applied at the end of the last reaction zone is the desired molecular weight. For a number average molecular weight (Mn) of about 10,000, a final pressure of 1 bar will suffice.

For a higher molecular product, the partial pressure of water above the product is to be decreased, for instance by applying a vacuum or passing an inert gas over it.

It is also possible to separate off the gases evolved from the reaction mixture, mainly water vapour, in between the reaction zones.

For product shaping (granulation) reasons, the gases evolved will preferably be separated off before the last reaction zone.

In such a mode of realization, the length of the second reaction zone (the first tubular reactor) is from about 0.1 to about 250 m, more in particular from 10 to 150 m, while the internal diameter is between 0.05 and 5.0 cm. The required length to separate off the gases sufficiently increases with the internal diameter. The length of the following reaction zones is determined mainly by the desired residence time in the reaction zones.

The second tubular reactor and any subsequent tubular reactors each have a diameter at least equal to that of the preceding reactor, but preferably a diameter of between 1.05 and 5, more in particular between 1.1 and 3, times the diameter of the preceding tubular reactor.

The maximum temperature that can be used in the various reactors depends on the composition of the reaction mixture, for instance on its water content and the degree of polymerization of the polyamide. The temperature in the last reactor preferably does not exceed 310°C. The lower limit is determined by the solidification temperature of the reaction mixture. To obtain a product with optimum colour, the temperature is best chosen as low as possible.

At the end of the last reactor, a liquid product is drained off that can be granulated in a way known *per se*.

A second method to convert a liquid reaction mixture into higher-molecular product is the application of aftercondensation, optionally continuous, in the solid phase.

To promote the feasibility of this process it is desirable for the product obtained from the second reaction zone to have a degree of polymerization high enough to enable conversion into granules.

In practice, for instance, a thread of the reaction mixture will be cooled and chopped into granules. These granules can, optionally after drying in a fluidized bed of it, be heated to a temperature between 240°C and the melting point of the product.

This aftercondensation in the solid phase is preferably effected in the presence of water vapour, the partial water-vapour pressure being between 0.01 and 10 bar.

A third method for obtaining higher-molecular nylon-4,6 comprises reacting the product obtained from one tubular reactor or a system of two or more of such reactors in liquid form during 1 to 60 minutes at a temperature of up to about 310°C and under reduced pressure or inert pressure.

In a certain mode of realization of the process according to the invention a relatively short tube can be used as second reaction zone and a liquid reaction mixture is drained off provided pressure and temperature are properly chosen. This reaction mixture can be subjected to aftercondensation in the usual manner, for instance in the solid phase, in the liquid phase in a reactor operated under reduced pressure, or in a solution of the product in an inert solvent.

The way in which the prepolymer is prepared in the first reaction zone affects the properties of the final product.

The prepolymerization is preferably effected as described in No. EP—A—0039524. The starting material used is a solution of the salt of 1,4 diaminobutane and adipic acid in water, the water content of the solution being between 10 and 50 wt.%.

This salt solution can be prepared by dissolving dry salt in water, or by dissolving adipic acid and diaminobutane in water, simultaneously or consecutively. Optionally, the salt solution obtained by one of these methods can subsequently be evaporated until the desired water content is reached. The salt solution may contain up to 25 wt.% (relative to the salt) other polyamide-forming compounds such as caprolactam, oxalic acid, terephthalic acid, isophthalic acid and hexamethylene diamine.

The ratio between the diamine and dicarboxylic acid may be equivalent, but by preference a slight excess of diamine is applied, more in particular between 1 and 5 moles % relative to the diamine.

In the course of the prepolymerization additives such as a catalyst, a chain length regulator or a stabilizer can be added.

Prepolymerization can be both continuous and batchwise. Because of the continuous character of the after-condensation, continuous prepolymerization is to be preferred. Preferably it is attempted to choose the prepolymerization conditions so that the prepolymer does not contain more than 0.20 mgeq pyrrolidine groups per g prepolymer, more in particular not more than 0.10 mgeq/g.

The invention also relates to high-molecular polytetramethylene adipamide and objects made wholly or partly, more in particular to more than 10 wt.%, from it.

The invention will be elucidated with reference to the drawing, in which

Fig. 1 represents an autoclave reactor followed by one tubular reactor, and

Fig. 2 represents an autoclave reactor followed by two tubular reactors.

The invention will now be elucidated with reference to some examples.

### Example I

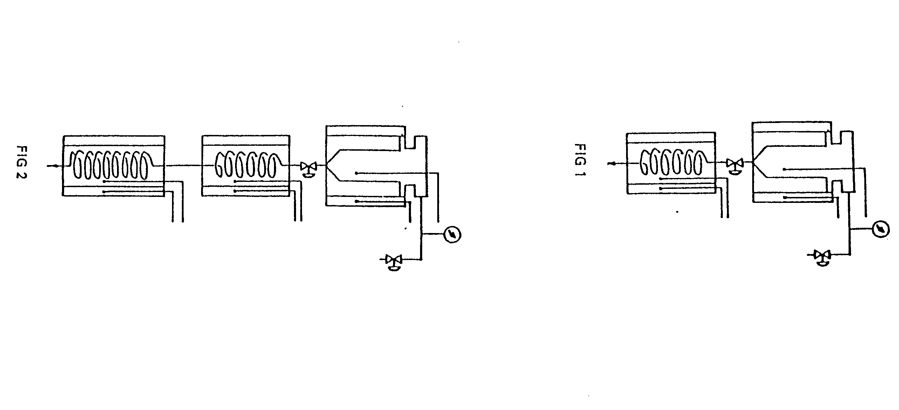

A 250 ml autoclave with bottom drain, which is coupled to a tubular reactor (length 4 m, internal diameter 1 mm) (Fig. 1), was used to study the polymerization of nylon 4,6. The products leaving the tubular reactor were collected in a water bath at atmospheric pressure.

The autoclave was fed with 130 g nylon 4,6 salt (pH 7.2), to which 2.3 g 1,4 diaminobutane in 13 ml water was added. After a nitrogen purge, the autoclave was heated to 210°C in 55 minutes, which was attended by a pressure increase to 12 bars.

Subsequently, the bottom drain to the hot (293°C) tubular reactor was opened and after a short while the polymer dripped from the tubular reactor.

15 Minutes after opening of the bottom drain, a sample was taken for analysis purposes. The sample's 'residence time' in the tubular reactor had been 40 seconds, its $\eta_{rel}$ was 1.20 and it contained 0.641 meq/g($-NH_2$), 0.666 meq/g($-COOH$) and 0.016 meq/g pyrrolidine groups. Following after-condensation in the solid phase (4 hours, 260°C, $N_2H_2O$ atmosphere) the white product had an $\eta_{rel}$ of 3.10. $\eta_{rel}$ as measured on 1 gr polyamide in 100 ml 98 weight % sulfuric acid at 23°C.

3

0 160 337

'Residence time' is defined as:

$$\frac{\text{tubular reactor volume}}{\text{prepolymer melt volume}} \times \text{total flow time}$$

assuming the reactor was entirely filled with liquid.

The *actual* residence time of the polymer in the tubular reactor can be an order of magnitude smaller, because of the two phase system (gas-liquid) in the reactor and depends on the pressuredrop over the reactor and the dimensions of the reactor.

Example II

Using the set-up and the material composition as described in Example I, some experiments were conducted, the variables being the time required for heating to the prepolymerization temperature ($t_1$), the prepolymerization temperature ($T_1$), the prepolymerization pressure ($P_1$), the tubular reactor temperature ($T_2$) and the moment of sampling ($t_2$), i.e. the time after opening of the bottom drain.

4

TABLE I

| experiment | reaction conditions | | | | | analytical results | | | after solid phase after condensation* | |
|---|---|---|---|---|---|---|---|---|---|---|
| | $t_1$ (min) | $T_1$ (°C) | $P_1$ (bar) | $T_2$ (°C) | $t_2$ (min) | (—NH$_2$) (meq/g) | (—COOH) (meq/g) | (pyr) (meq/g) | $\eta_{rel}$ | $\eta_{rel}$ |
| a | 240 | 190 | 10 | 283 | 10 | 0.550 | 0.757 | 0.003 | 1.24 | 2.26 |
| | | | | | 75 | 0.418 | 0.495 | 0.003 | 1.27 | 2.57 |
| b | 230 | 190 | 8.5 | 285 | 45 | 0.645 | 0.721 | 0.002 | 1.22 | 2.57 |
| | | | | | 118 | 0.536 | 0.540 | 0.002 | 1.25 | 3.40 |
| c | 60 | 205 | 10 | 290 | 25 | 0.595 | 0.525 | 0.018 | 1.24 | 3.20 |
| d | 60 | 205 | 10 | 288 | 25 | 0.800 | 0.705 | 0.017 | 1.20 | 3.00 |
| e | 55 | 210 | 12 | 293 | 15 | 0.721 | 0.659 | 0.020 | 1.20 | 3.25 |
| f | 60 | 215 | 15 | 291 | 20 | 0.768 | 0.531 | 0.039 | 1.20 | — |

*4 hours, 260°C

## 0 160 337

Example III
Using the set-up and material composition as described in Example I, some experiments were conducted in which the length of the tubular reactor, whose internal diameter was 1 mm, was varied.

TABLE II

| experiments | reaction conditions | | | | | | | analytical results | | | after solid phase after-condensation |
|---|---|---|---|---|---|---|---|---|---|---|---|
| | length | $t_1$ (min) | $T_1$ (°C) | $P_1$ (bar) | $T_2$ (°C) | $t_2$ (min) | $t_3$ (sec) | $(-NH_2)$ (meq/g) | $(-COOH)$ (meq/g) | (pyr) (meq/g) | $\eta_{rel}$ |
| a | 0.5 | 50 | 204 | 14 | 300 | 6 | 1.0 | 1.710 | 1.346 | 0.020 | 3.50 |
| b | 1 | 59 | 204 | 13 | 300 | 9 | 3.5 | 1.202 | 1.025 | 0.017 | 3.75 |
| c | 2 | 55 | 207 | 12 | 302 | 9 | 9 | 1.207 | 1.074 | 0.017 | 2.80 |
| d | 3 | 50 | 207 | 13 | 300 | 10 | 17 | 1.003 | 0.918 | 0.015 | 2.80 |
| e | 4 | 55 | 210 | 12 | 293 | 15 | 40 | 0.641 | 0.666 | 0.016 | 3.10 |
| f | 4 | 60 | 208 | 12 | 298 | 18 | 50 | 0.506 | 0.458 | 0.019 | 3.14 |
| g | 7 | 60 | 210 | 13 | 289 | 20 | 125 | 0.341 | 0.193 | 0.055 | 2.64 |
| h | 12.6 | 60 | 210 | 13/21** | 295 | 25 | 275 | 0.249 | 0.173 | 0.080 | 2.53 |

*4 hours, 260°C
**After opening of bottom drain, pressure increased from 13 to 21 bars using $N_2$

As can be seen, 'the residence time' ($t_3$) in the tubular reactor increases with the tube length, which is attended by an increase in the pyrrolidine concentration. The higher pyrrolidine concentration would seem to impede good after-condensation in the solid form.

The samples from the 0.5 and the 1 m tubular reactors had a powder structure.

### Example IV

Using the set-up and material composition as given in Example I, but now with a second tubular reactor coupled to the tubular reactor (Fig. 2), a number of experiments were conducted. The dimensions of the second tubular reactor are: length 5 m, internal diameter 6 mm, and the temperature of this reactor is given as $T_3$. The polymers prepared using this set-up were thread-forming; the results of analysis of the products obtained are given in Table III.

8

TABLE III

| experiment | reaction conditions | | | | | | analytical results | | | after solid phase after condensation | |
|---|---|---|---|---|---|---|---|---|---|---|---|
| | $t_1$ (min) | $T_1$ (°C) | $P_1$ (bar) | $T_2$ (°C) | $T_3$ (°C) | $t_2$ (min) | (—NH$_2$) (meq/g) | (—COOH) (meq/g) | (pyr) (meq/g) | $\eta_{rel}$ | $\eta_{rel}$ |
| a | 250 | 190 | 10 | 280 | 280 | 50 | 0.059 | 0.184 | 0.008 | 1.70 | — |
| | | | | | | 90 | 0.089 | 0.107 | 0.016 | 1.82 | |
| b | 235 | 190 | 10 | 285 | 300 | 40 | 0.070 | 0.114 | 0.011 | 1.77 | — |
| | | | | | | 90 | 0.095 | 0.064 | 0.027 | 1.87 | 3.16 |
| c | 90 | 190 | 9 | 300 | 300 | 40 | 0.088 | 0.055 | 0.030 | 1.87 | 2.85 |
| | | | | | | 100 | 0.091 | 0.035 | 0.026 | 1.83 | 3.03 |
| d | 120 | 200 | 12.5 | 302 | 302 | 35 | 0.083 | 0.091 | 0.024 | 1.82 | 3.13 |
| | | | | | | 100 | 0.095 | 0.030 | 0.036 | 1.96 | 2.93 |

*4 hours, 260°C

### Example V

Polymers prepared by the method described in Example IV were used to study the after-condensation in the melt at 300°C.

To this end, the drain was divided into portions.

The after-condensation was studied on 3 g samples placed in glass test tubes. After having been purged with nitrogen, the tubes were suspended in a hot Marlotherm bath, which was followed by reacting at 0.02 bar during 20 minutes. The results of this after-condensation are given in Table IV below.

TABLE IV

| experiment | | analytical results | | | | analytical results after 20 minutes at 300°C and 0,02 bar | | | |
|---|---|---|---|---|---|---|---|---|---|
| | $t_2$ (min) | (—NH$_2$) (meq/g) | (—COOH) (meq/g) | (pyr) (meq/g) | $\eta_{rel}$ | —(NH$_2$) (meq/g) | (—COOH) (meq/g) | (pyr) (meq/g) | $\eta_{rel}$ |
| a | 8 | 0.046 | 0.181 | 0.021 | 1.68 | 0.034 | 0.126 | 0.019 | 1.92 |
| b | 16 | 0.053 | 0.043 | 0.029 | 1.77 | 0.035 | 0.070 | 0.022 | 2.16 |
| c | 25 | 0.077 | 0.064 | 0.036 | 1.80 | 0.056 | 0.028 | 0.024 | 2.30 |
| d | 30 | 0.087 | 0.031 | 0.025 | 1.75 | 0.061 | 0.023 | 0.030 | 2.33 |
| e | 50 | 0.105 | 0.0201 | 0.053 | 1.77 | 0.081 | 0.016 | 0.053 | 2.30 |

### Example VI

A 10 l autoclave with bottom drain, which is coupled to a tubular reactor with inside diameter of 0,4 cm and length of 5 meter, was fed with 3800 gr nylon 4,6 salt, to which 3800 gr water and 49 gr diaminobutane was added. 3500 gr water is boiled off at 2 bar after which the temperature is increased to 210°C and kept at that during 30 minutes. During this period the pressure increased to about 12 bar. Consequently the bottom drain is opened and the content of the reactor through the tubular reactor flashed off to atmospheric pressure. The tubular reactor is heated at a temperature of 305°C. The 'residence time' is calculated to be about 15 seconds.

The polymer streaming from the tubular reactor is cooled in a waterbath, grinded and subjected to an aftercondensation in a rotating tumbledryer during 4 hours at 260°C in a $N_2/H_2O$ atmosphere. A white product with $\eta_{rel} = 4,07$ was obtained $\eta_{rel}$ of the product before after condensation was 1.39.

### Example VII

The experiment of example VI was repeated and a second tubular reactor (inside diameter 14 mm) was coupled to the first tubular reactor. Results obtained with different lengths of the reactors and at different temperatures are shown in Table V.

12

| TABLE V | | | | | | | | |
|---------|---|---|---|---|---|---|---|---|
| tubular reactor 1 diameter 0,4 cm | | | tubular reactor 2 diameter 1,4 cm | | | | | solid phase aftercondensation 4 hrs at 260°C |
| length [m] | temp. [°C] | 'residence time' [sec] | length [m] | temp. [°C] | 'residence time' [sec] | $\eta_{rel}$ | appearance | $\eta_{rel}$ |
| 5 | 305 | 15 | 0 | | | 1,39 | white | 4,07 |
| 1 | 305 | 2,8 | 0 | | | 1,18 | white | 4,14 |
| 5 | 305 | 15 | 5 | 305 | 184 | 1,76* | some discolouring | 3,63 |
| 5 | 295 | 15 | 5 | 295 | 184 | 1,40 | white | 4,13 |
| 10 | 295 | 60 | 11 | 295 | 700 | 1,64* | white | 4,02 |
| 15 | 295 | 112 | 5 | 295 | 450 | 1,50 | white | 4,61 |
| 15 | 295 | 118 | 11 | 295 | 1030 | 1,73* | white | 3,94 |
| 15 | 300 | 115 | 11 | 300 | 1000 | 1,80* | white | 4,07 |
| 15 | 290 | 120 | 11 | 290 | 1050 | 1,70* | white | 3,93 |
| 30 | 295 | 1250 | 11 | 290 | 2565 | 1,95* | gray | |

*Thread forming

From the last experiment of example VII it is clear that longer 'residence times' are unfavourable for obtaining a polyamide with good appearance. The 'residence time' quoted for this experiment is equivalent to an actual residence time of about 10 minutes.

**Claims**

1. Process for the preparation of polytetramethylene adipamide by heating the salt of 1,4 diaminobutane and adipic acid, optionally with at most 25 wt.% other polyamide-forming compounds, under elevated pressure and subjecting the prepolymer thus formed to aftercondensation in at least one subsequent reaction zone, characterized in that a prepolymer-containing, liquid reaction mixture is prepared at a pressure between 2 and 100 bar and in that the temperature of this reaction mixture is maintained above its solidification point in a second reaction zone while the pressure is simultaneously reduced.

2. Process according to claim 1, characterized in that the prepolymer is prepared at a pressure of between 2 and 15 bars.

3. Process according to claims 1 or 2, characterized in that the second reaction zone is effected in a tubular reactor.

4. Process according to claim 3, characterized in that, subsequent to the second reaction zone, the liquid reaction mixture is passed through one or more following tubular reactors having a diameter at least equal to that of the preceding reactor.

5. Process according to claim 1, characterized in that at the end of the second reaction zone the gas phase evolved from the reaction mixture is separated off.

6. Process according to claim 5, characterized in that, after separation of the gas phase, the reaction mixture is in liquid form reacted during 1—60 minutes at a temperature of up to about 310°C and under reduced pressure of inert pressure.

**Patentansprüche**

1. Verfahren zur Herstellung von Polytetramethylenadipamid durch Erhitzen eines Salzes von 1,4-Diaminobutan und Adipinsäure, gegebenenfalls mit höchstens 25 Gew.-% anderer Polyamid-bildender Verbindungen, unter erhöhtem Druck, und Nachkondensation des so gebildeten Praepolymers in wenigstens einer nachfolgenden Reaktionszone, dadurch gekennzeichnet, daß ein Polymer-haltiges, flüssiges Reaktionsgemisch bei einem Druck zwischen 2 und 100 bar hergestellt wird und daß die Temperatur dieses Reaktionsgemisches oberhalb dessen Erstarrungspunkt bei gleichzeitiger Reduzierung des Drucks gehalten wird.

2. Verfahren nach Anspruch 1 dadurch gekennzeichnet, daß das Praepolymer bei einem Druck zwischen 2 und 15 hergestellt wird.

3. Verfahren nach Anspruch 1 oder 2, dadurch gekennzeichnet, daß die zweite Reaktionszone in einem Rohrreaktor durchgeführt wird.

4. Verfahren nach Anspruch 3, dadurch gekennzeichnet, daß nach der zweiten Reaktionszone das flüssige Reaktionsgemisch durch einen oder mehrere aufeinanderfolgende Rohrreaktoren mit einem Durchmesser von wenigstens gleich dem des vorhergehenden Reaktors geführt wird.

5. Verfahren nach Anspruch 1, dadurch gekennzeichnet, daß am Ende der zweiten Reaktionszone die aus dem Reaktionsgemisch freigesetzte Gasphase abgetrennt wird.

6. Verfahren nach Anspruch 5, dadurch gekennzeichnet, daß nach Abtrennung der Gasphase das Reaktionsgemisch in flüssiger Form während 1—60 Minuten bei einer Temperatur bis etwa 310°C und unter vermindertem Druck oder Inertdruck umgesetzt wird.

**Revendications**

1. Procédé de préparation de polytétraméthylène-adipamide par chauffage du sel de 1,4-diaminobutane et d'acide adipique, facultativement avec un maximum des 25% en poids d'autres composés formant des polyamides, sous une pression élevée et soumission du prépolymère ainsi formé à une post-condensation dans au moins une zone de réaction ultérieure, caractérisé en ce qu'on prépare un mélange de réaction liquide contenant le prépolymère sous une pression comprise entre 2 et 100 bars et en ce qu'on maintient la température de ce mélange de réaction au-dessus de son point de solidification dans une seconde zone de réaction tout en réduisant simultanément la pression.

2. Procédé selon la revendication 1, caractérisé en ce qu'on prépare le prépolymère sous une pression de 2 à 15 bars.

3. Procédé selon la revendication 1 ou 2, caractérisé en ce qu'on effectue la seconde réaction dans un réacteur tubulaire.

4. Procédé selon la revendication 3, caractérisé en ce qu'après la seconde zone de réaction, on fait passer le mélange de réaction liquide à travers un ou plusieurs réacteurs tubulaires qui suivant ayant un diamètre au moins égal à celui de réacteur précédent.

5. Procédé selon la revendication 1, caractérisé en ce qu'à la fin de la seconde zone de réaction, on sépare la phase gazeuse dégagée par le mélange de réaction.

6. Procédé selon la revendication 5, caractérisé en ce qu'après la séparation de la phase gazeuse, on fait réagir le mélange de réaction sous forme liquide pendant 1 à 60 minutes à une température allant jusqu'à 310°C environ et sous pression réduite ou une pression inerte.

0 160 337

FIG 1

FIG 2